# FASCICULE DE BREVET EUROPEEN

(11) **EP 3 105 449 B1**
(45) Date de publication et mention de la délivrance du brevet: **06.06.2018**
(21) Numéro de dépôt: 15707706.6
(22) Date de dépôt: 06.02.2015
(51) Int. Cl.: F02M 35/10, B60K 13/02, F02M 35/12

(54) **DISPOSITIF D'ADMISSION D'AIR FRAIS POUR MOTEUR À COMBUSTION DE VÉHICULE AUTOMOBILE**
ANSAUGSYSTEM FUR BRENNKRAFTMASCHINE EINES KRAFTFAHRZEUGES
INTAKE SYSTEM FOR A COMBUSTION ENGINE FOR AN AUTOMOBILE

(30) Priorité: 13.02.2014 FR 1451112
(43) Date de publication de la demande: 21.12.2016
(73) Titulaire: Renault S.A.S., 92100 Boulogne-Billancourt (FR)
(72) Inventeur: MARREL, Sebastien, F-28100 Dreux (FR); VARGAS, Marcelo, 81630-110 Curutiba (BR)
(86) Numéro de dépôt international: PCT/FR2015/050286
(87) Numéro de publication internationale: WO 2015/121569

(56) Documents cités:
- EP-A2- 1 990 530
- US-A- 3 249 172
- US-A- 3 641 746
- US-A- 5 794 733
- US-A1- 2003 188 902
- US-A1- 2006 006 012
- US-A1- 2010 301 638

## Description

L'invention concerne un dispositif d'admission d'air frais destiné à être disposé à l'avant d'un véhicule automobile, pour alimenter le moteur à combustion interne de celui-ci.

Les moteurs à combustion interne comportent une ligne d'admission d'air généralement munie d'une écope dirigée vers l'avant du véhicule, de manière à capter l'air lorsque le véhicule est en mouvement.

Par ailleurs, on définit en général dans un véhicule automobile une face avant technique comme étant une structure plus ou moins complexe, située entre le radiateur et la calandre du véhicule et remplissant plusieurs fonctions, comme celle de supporter les butées de capot, la serrure de capot, etc.... Cette face avant technique peut prendre simplement la forme d'une traverse à l'extrême avant du véhicule, ou peut comporter un châssis plus complexe.

De manière classique, l'écope de la ligne d'admission d'air d'un moteur à combustion est située dans une région quelconque du compartiment moteur, par exemple à proximité ou sur la face avant technique. L'écope d'admission d'air est positionnée de manière à capter de l'air à une température permettant d'améliorer l'agrément de conduite et les performances du moteur. Ainsi, lorsque le véhicule est en mouvement, l'air traverse la grille de calandre puis pénètre dans l'écope et dans des conduits menant à la chambre de combustion.

Dans certains véhicules, ou dans certaines conditions de fonctionnement, il se peut toutefois que la température de l'air au niveau de la face avant technique soit trop élevée. Il en résulte alors une dégradation des performances du moteur qui se ressentent en particulier au niveau de l'agrément de conduite et de la puissance délivrée. US5794733 divulgue un dispositif d'admission avec une écope en forme de soufflet, où le dispositif de rétention d'eau se trouve en amont de l'ouverture de l'écope. Au vu de ce qui précède, le but de l'invention est donc de fournir un dispositif d'admission d'air frais muni d'une écope destinée à être disposée dans une zone dans laquelle la température d'air est potentiellement moins élevée qu'au niveau de la face avant technique.

Selon un premier aspect de l'invention, un dispositif d'admission d'air frais, pour alimenter un moteur de véhicule automobile, est muni d'un récipient d'admission présentant une partie en forme de conduite, et d'une écope comprenant une ouverture d'admission pour capter l'air frais. L'ouverture d'admission est située sur la face supérieure de l'écope, et le récipient comprend un couvercle interposé entre l'écope et le récipient d'admission.

De cette manière, le dispositif est apte à être mis en place dans un véhicule automobile avec l'écope située plus en avant que la face avant technique. De plus, l'ouverture d'admission est orientée vers le haut. Il est par ailleurs avantageux de capter l'air plus haut lors de passages à gué car on évite le risque d'entrée d'eau, et donc le risque de dégradation des performances du moteur, voire de la détérioration de celui-ci.

Dans un mode de réalisation, deux orifices de communication sont respectivement pratiqués sur le couvercle et sur l'écope, les deux orifices étant de forme sensiblement identique et disposés en regard l'un de l'autre. Ces deux orifices permettent de rendre communicants le récipient d'admission avec l'écope du dispositif d'admission.

Dans un mode de réalisation préféré, la partie en forme d'écope présente une forme de boîtier ouvert vers le haut avec un carter interne muni de deux ouvertures d'air latérales. Un tel agencement renforce l'étanchéité du dispositif d'admission d'air frais à l'eau pouvant provenir par exemple d'un passage à gué ou de pluies importantes.

Dans un mode de réalisation, le carter interne est doté de nervures sur sa surface extérieure afin d'assurer une meilleure acoustique et un renforcement mécanique du carter interne.

On peut en outre prévoir que l'écope comporte un affaissement sur un côté de sa face supérieure afin d'améliorer la captation du flux d'air entrant.

Selon un autre aspect de l'invention, un véhicule automobile comporte une traverse extrême avant disposée entre le compartiment moteur et la calandre du véhicule. Il comprend en outre un dispositif d'admission d'air frais tel qu'un de ceux décrits précédemment et des moyens de fixation du dispositif d'admission à la traverse extrême avant. Le dispositif d'admission est disposé de telle sorte que l'écope se situe plus en avant du véhicule que la traverse extrême avant et de préférence, plus haut que ladite traverse.

De cette manière, l'air frais admis dans la chambre de combustion du moteur du véhicule est capté dans une zone où l'air est susceptible d'être moins chaud, en avant du compartiment moteur, au plus près de la calandre. On diminue ainsi le risque de capter de l'air trop chaud, et donc de réduire les performances du moteur.

Dans un mode de réalisation préféré, la traverse extrême avant présente un rebord interposé entre l'écope et le couvercle, et le rebord comporte un passage traversant pour l'air provenant de l'écope.

Un joint d'étanchéité peut être disposé sur la totalité ou une partie du pourtour de la paroi latérale de l'écope, au niveau du raccordement de celle-ci avec le couvercle.

Selon un mode de réalisation, le véhicule comporte une grille de bouclier, un joint d'étanchéité étant comprimé, d'un côté contre l'écope du dispositif d'admission, de l'autre côté contre la grille de bouclier.

D'autres buts, caractéristiques et avantages de l'invention apparaîtront à la lecture de la description suivante de quelques modes de réalisation constituant uniquement des exemples non limitatifs, et faite en référence aux dessins annexés sur lesquels :
- la figure 1 est une vue en perspective éclatée des différents éléments constitutifs d'un dispositif d'admission d'air frais selon un mode de réalisation de l'invention,
- la figure 2 représente plus particulièrement l'écope et le second joint du dispositif d'admission de la figure 1, et
- la figure 3 est une vue schématique du dispositif d'admission de la figure 1 intégré dans un véhicule automobile.

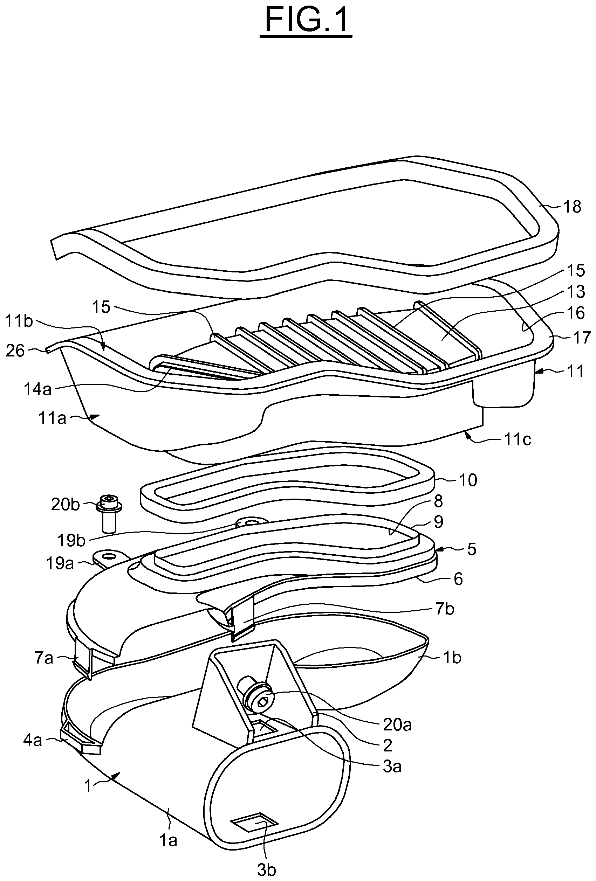

En se référant à la figure 1, on a représenté les éléments constitutifs d'un dispositif d'admission d'air frais, destiné à capter l'air pour alimenter la chambre de combustion du moteur à combustion d'un véhicule automobile.

Le dispositif comprend trois pièces principales qui sont un récipient d'admission 1, un couvercle 5 et une écope 11. Les trois pièces principales ont été représentées désassemblées et disposées côte à côte sur cette figure 1.

Le récipient d'admission 1, comprend une partie formant conduite la et une partie formant récipient 1b. La partie formant conduite la comprend un premier support de boulon 2, destiné à faciliter la fixation du dispositif d'admission à des éléments de la structure du véhicule automobile. La partie la comprend également deux trous de raccordement 3a et 3b. Ceux-ci sont destinés à coopérer avec des éléments de blocage d'une canalisation en vue de raccorder celle-ci avec la partie la. La canalisation peut par exemple être un conduit relié à la chambre de combustion du moteur du véhicule. La partie formant récipient 1b constitue la moitié inférieure du récipient d'admission 1, auquel est reliée la partie formant conduite la. Sur sa paroi extérieure, la partie 1b comprend un premier logement de languette 4a. Elle comprend également un second logement de languette 4b, non visible sur la figure 1 car caché derrière le support 2.

Le couvercle 5 correspond à la partie supérieure de la partie formant récipient 1b. La base inférieure du couvercle 5 possède à cet égard une forme complémentaire au contour supérieur de la partie 1b. Le couvercle 5 comprend, au niveau de sa base inférieure, une première extrusion d'assemblage 6, destinée à venir s'emboîter à l'intérieur du contour supérieur de la partie 1b, de manière à solidariser les deux pièces et améliorer l'étanchéité. Le couvercle 5 comprend par ailleurs deux languettes de fixation 7a et 7b, pouvant se fixer respectivement dans les logements 4a et 4b. Leur fonction est également de solidariser l'assemblage entre la partie 1b et le couvercle 5. Le couvercle 5 comprend sur sa partie inférieure un orifice de couvercle 8.

L'écope 11 a une forme spécifique qu'on peut assimiler à un boîtier sur lequel on définit une paroi latérale 11a, une face supérieure 11b et une face inférieure 11c. Sur le dessin de la figure 1, la face 11c n'est pas visible. Toutefois, on a référencé la face 11c sur la figure 1 au niveau de l'arête à partir de laquelle elle commence à se profiler.

L'écope 11 comprend sur sa face inférieure 11c un alésage d'écope 12, non visible sur la figure 1, dont le contour est de forme sensiblement identique à celle du contour de l'alésage 8 du couvercle 5. Le contour de l'alésage 8 se prolonge en une deuxième extrusion d'assemblage 9 destinée à s'emboîter dans l'alésage 12 et venir se coller à l'intérieur de la paroi latérale 11a afin de solidariser l'assemblage du couvercle 5 et de l'écope 11.

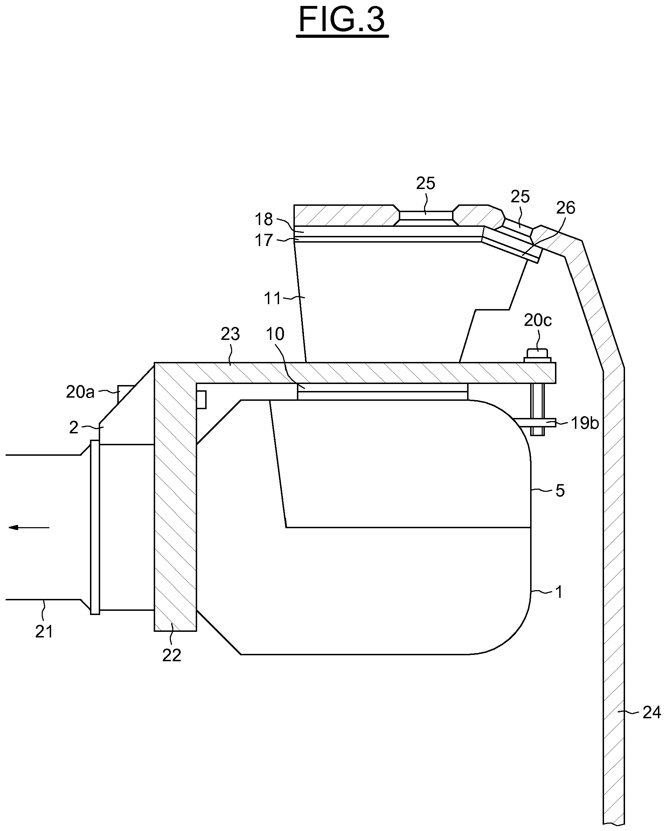

Pour assurer une bonne étanchéité, un premier joint d'étanchéité 10 est représenté sur la figure 1. Il est destiné à être disposé entre la surface supérieure du couvercle 5, et la surface inférieure d'une traverse extrême avant du véhicule, disposée entre le compartiment moteur et la calandre du véhicule (voir figure 3).

L'écope 11 comprend sur sa face supérieure 11b une ouverture d'admission 16 permettant de capter l'air entrant lorsque le véhicule est en mouvement.

Le dispositif d'admission est mis en place de manière à présenter cette ouverture vers l'avant du véhicule. Par exemple, on peut envisager de disposer l'ouverture d'admission 16 derrière une grille de bouclier sous le capot du véhicule automobile.

L'ouverture 16 étant disposée sur la face supérieure 11b de l'écope 11, celle-ci n'est que partiellement dirigée vers l'avant du véhicule. En effet, elle est principalement dirigée vers le haut, de façon à capter l'air circulant entre la calandre de bouclier et le capot du véhicule. Il en résulte une admission d'air plus frais et une étanchéité renforcée.

En vue d'améliorer encore l'étanchéité et de préserver la durée de vie de l'écope, un second joint d'étanchéité 18 est de préférence disposé sur la face supérieure 11b de l'écope 11. Ce joint 18 peut au choix être un élément annulaire ouvert, c'est-à-dire comprenant deux extrémités se faisant face, ou, comme cela est représenté sur la figure 1, un élément annulaire fermé. Le joint d'étanchéité 18 est disposé sur l'écope 11 au moyen d'un support de joint 17.

L'écope 11 comprend en outre un carter intérieur 13, muni de deux ouvertures latérales 14a et 14b, dont seule la première est visible sur la figure 1. Le carter 13 est disposé au dessus de l'alésage d'écope 12, de manière à retenir l'eau ayant pu pénétrer dans l'écope. Le carter 13 est muni de nervures 15 sur sa surface extérieure de manière à assurer une meilleure acoustique et à renforcer sa structure.

L'air ayant franchi l'ouverture d'admission 16 pour pénétrer dans l'écope va donc contourner le carter intérieur 13, passant par l'une ou par l'autre des ouvertures latérales 14a et 14b. Il franchit ensuite l'alésage d'écope 12 et se trouve dans le récipient formé par la partie 1b et le couvercle 5. Il emprunte enfin la partie formant conduite 1a, de manière à pénétrer ensuite dans le conduit d'admission du moteur du véhicule.

Par ailleurs, on voit sur la figure 1 que l'écope 11 comprend un affaissement 26 au niveau du support de joint 17, sur le côté de la face supérieure 11b qui est le plus en avant lorsque le dispositif est incorporé dans un véhicule automobile. L'affaissement 26 a pour but de capter une part plus importante du flux d'air entrant.

Le dispositif est fixé à la traverse extrême avant faisant partie de la structure du véhicule au moyen d'un premier boulon 20a, coopérant avec un premier support de boulon 2, et deux boulons 20b et 20c, supportés respectivement par des supports de boulon 19a et 19b (voir figure 3).

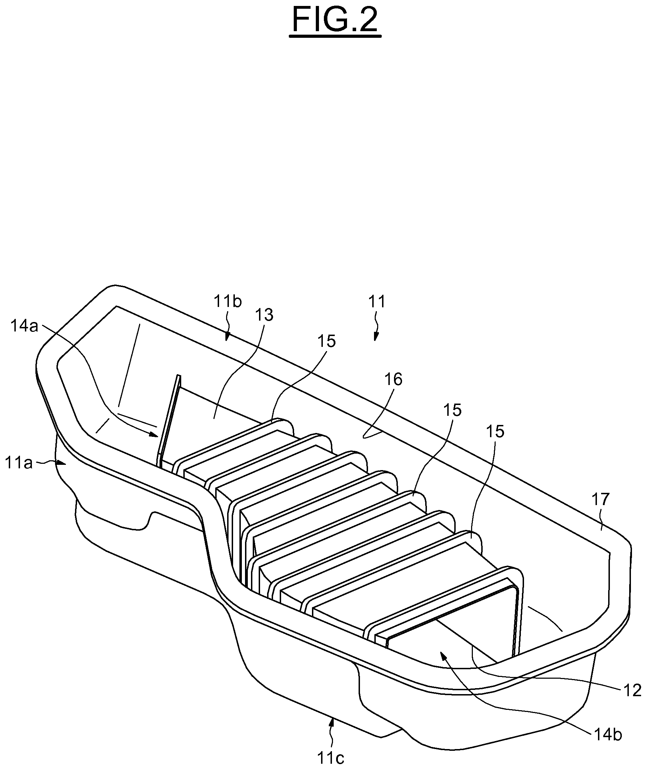

En référence à la figure 2, on a représenté l'écope 11 sous un angle différent, et isolée des autres pièces principales.

Comme sur la figure 2, la paroi latérale 11a et la face supérieure 11b sont visibles, de même que le support de joint 17 et l'arête à partir de laquelle commence à exister la face inférieure 11c.

La figure 2 présente un détail plus précis du carter d'admission 13. En particulier, on voit la seconde ouverture d'air latérale 14b. A travers cette seconde ouverture, l'alésage d'écope 12 est visible, occupant une part importante de la face inférieure 11c.

Cette figure 2 permet de voir de manière plus précise le chemin parcouru par l'air franchissant l'ouverture d'admission 16. Une partie de cet air contourne en effet le carter 13 pour passer dans l'ouverture 14b, puis franchit l'alésage 12 et sort de l'écope, pour entrer dans le récipient.

La figure 3 est une vue schématique d'une partie avant d'un véhicule muni d'un dispositif tel que celui des figures 1 et 2.

Cette vue schématique représente les pièces principales du dispositif d'admission d'air frais, à savoir le récipient d'admission 1, le couvercle 5 et l'écope 11. Sont également représentés le premier joint d'étanchéité 10 et le second joint d'étanchéité 18.

Le dispositif est intégré dans un véhicule automobile dont seuls certains éléments particuliers ont été représentés.

Une conduite d'admission 21 est représentée, à laquelle se raccorde la partie formant conduite la du récipient d'admission 1. On pourra utiliser à cet égard les trous de raccordement 3a et 3b. Une flèche est représentée dans cette conduite, schématisant le sens d'écoulement de l'air frais admis et dirigé vers la chambre de combustion du moteur.

On a également représenté sur cette figure la traverse extrême avant 22 du véhicule. Comme cela a été évoqué précédemment, un véhicule est généralement muni d'une face avant technique, disposée en avant du radiateur du véhicule automobile, et qui a pour fonction de supporter différents éléments de l'avant du véhicule, tels que les butées de capot, etc.... La face avant technique peut se résumer à une traverse, en l'espèce la traverse extrême avant 22. La traverse extrême avant se situe donc à l'avant du radiateur et du compartiment moteur. Le récipient d'admission 1 est fixé à la traverse 22 au moyen du boulon 20a sur son support 2.

La traverse extrême avant 22 comprend en outre un rebord 23, muni d'un passage traversant non visible sur la figure 3. Ce passage traversant est suffisamment large pour qu'on puisse y loger la seconde extrusion d'assemblage 9 du couvercle 5, la partie la plus basse de la paroi 11a de l'écope 11, et le premier joint d'étanchéité 10. On voit sur la figure 3 que le joint d'étanchéité 10 est disposé entre la partie supérieure du couvercle 5 et le rebord 23 de la traverse extrême avant 22. Grâce au passage traversant et au joint d'étanchéité 10, l'écope 11 est située plus haut que la traverse 22.

Le passage traversant permet de maintenir solidaires le couvercle 5, l'écope 11, le joint 10 avec le rebord 23 de la traverse 22. On voit sur la figure 3 le support 19b du boulon 20c, qui a pour fonction, comme le support 19a et le boulon 20b, de renforcer davantage cet assemblage. Ainsi le dispositif est monté de part et d'autre du rebord 23, ce qui a pour effet de solidariser davantage les pièces entre elles tout en permettant de disposer l'ouverture 16 de l'écope 11 dans une zone où la température d'air est susceptible d'être plus faible.

Le véhicule représenté comprend en outre une calandre 24, située en avant du dispositif d'admission et de la traverse extrême avant. La calandre 24 comprend une grille de bouclier 25, comportant de multiples ouvertures, dont deux sont visibles sur la figure 3, réparties sur la surface de la calandre sous le capot du véhicule.

Par ailleurs, on remarque sur la figure 3 l'affaissement 26 sur un côté de la face 11b de l'écope 11. On voit également que le second joint d'étanchéité est comprimé entre le support de joint 17 de l'écope 11 et la grille de bouclier 25 de la calandre 24. Un tel agencement permet d'une part de mieux capter l'air frais, et d'autre part de préserver la durée de vie de l'écope 11 et de la grille de bouclier 25. Le joint d'étanchéité 18 n'est pas obligatoirement de forme fermée, tel que représenté sur la figure 3. On peut envisager un joint d'étanchéité de forme ouverte, comprenant donc deux extrémités se faisant face, avec une faible distance entre les deux faces, par exemple n'excédant pas 1 mm.

Lorsque le véhicule est en mouvement, l'air frais circule le long de la calandre passant sous le capot du véhicule. Il traverse les ouvertures de la grille de bouclier 25, et pénètre dans l'écope 11 du dispositif d'admission. Par le cheminement qui a déjà été décrit, l'air frais se retrouve ensuite dans la partie formant conduite la du récipient d'admission 1. Il passe alors dans la conduite d'admission 21 qui l'achemine vers la chambre de combustion du moteur du véhicule.

Au moyen de la grille de calandre 25, du rebord 23 et de la forme et des moyens de fixation 2, 19a, 19b, 20a, 20b et 20c du dispositif d'admission d'air frais, on parvient à placer l'écope et l'ouverture d'admission en avant et au dessus de la traverse extrême avant. On arrive donc à capter l'air plus en avant et plus haut qu'avec une ligne d'admission d'air classique. Un tel agencement dans un véhicule automobile permet de capter un air plus frais, ce qui se traduit par une puissance augmentée pour le moteur de ce véhicule.

La réalisation d'un dispositif en trois pièces principales assemblées, avec une ouverture d'admission située sur la face supérieure de l'écope permet également de capter l'air plus en avant et plus haut qu'avec une ligne d'admission classique.

L'affaissement sur la partie la plus en avant de l'écope (par rapport au véhicule sur lequel elle est destinée à être incorporée) permet d'optimiser la captation d'air.

Le carter intérieur 13, et le fait de capter l'air plus haut permettent une meilleure étanchéité de la ligne d'admission d'air frais lors d'un passage à gué notamment.

Enfin, les rainures du carter intérieur 13 réduisent le bruit occasionné par le passage de l'air dans le dispositif.

## Revendications

1. Dispositif d'admission d'air frais apte à être mis en place dans un véhicule automobile pour alimenter un moteur du véhicule automobile, le dispositif comprenant un récipient d'admission (1) présentant une partie en forme de conduite (la), et une écope (11) comprenant une ouverture d'admission (16) pour capter l'air frais, l'ouverture d'admission (16) étant située sur la face supérieure (11b) de l'écope (11) et orientée vers le haut lorsque le dispositif est mis en place dans le véhicule automobile, le récipient (1) comprenant un couvercle (5) interposé entre l'écope (11) et le récipient d'admission (1), deux orifices de communication (8, 12) étant respectivement pratiqués sur le couvercle (5) et sur l'écope (11), les deux orifices (8, 12) étant de forme sensiblement identique et disposés en regard l'un de l'autre, **caractérisé en ce que** l'écope (11) présente une forme de boîtier ouvert vers le haut avec un carter interne (13) disposé au-dessus d'un orifice d'écope (12), de manière à retenir de l'eau ayant pu pénétrer dans l'écope (11), le carter interne (13) étant muni de deux ouvertures d'air latérales (14a, 14b).

2. Dispositif selon la revendication 1, **caractérisé en ce que** le carter interne (13) est doté de nervures (15) sur sa surface extérieure.

3. Dispositif selon la revendication 1 ou 2, **caractérisé en ce que** l'écope (11) comprend un affaissement (26) sur un côté de sa face supérieure (11b).

4. Véhicule automobile, comportant une traverse extrême avant (22) disposée entre le compartiment moteur et la calandre (24) du véhicule, **caractérisé en ce qu'**il comprend en outre un dispositif d'admission d'air frais selon l'une quelconque des revendications 1 à 3, et des moyens de fixation (20a, 20b, 20c) du dispositif d'admission à la traverse extrême avant (22), le dispositif d'admission étant disposé de telle sorte que l'écope (11) se situe plus en avant du véhicule que la traverse extrême avant (22).

5. Véhicule automobile selon la revendication 4, **caractérisé en ce que** l'écope (11) se situe plus haut que la traverse extrême avant (22).

6. Véhicule automobile selon l'une des revendications 4 et 5, **caractérisé en ce que** la traverse extrême avant (22) présente un rebord (23) interposé entre l'écope (11) et le couvercle (5), ledit rebord (23) comportant un passage traversant pour l'air provenant de l'écope (11).

7. Véhicule selon l'une quelconque des revendications 4 à 6, **caractérisé en ce qu'**un joint d'étanchéité (10) est disposé sur la totalité ou une partie du pourtour de la paroi latérale (11a) de l'écope (11), au niveau du raccordement de celle-ci avec le couvercle (5).

8. Véhicule selon l'une quelconque des revendications 4 7, **caractérisé en ce que** le véhicule comporte une grille de bouclier (25), un joint d'étanchéité (18) étant comprimé, d'un côté contre l'écope (11) du dispositif d'admission, de l'autre côté contre la grille de bouclier (25).

## Patentansprüche

1. Frischluftansaugvorrichtung, die in ein Kraftfahrzeug eingesetzt werden kann, um einen Motor des Kraftfahrzeugs zu versorgen, wobei die Vorrichtung einen Ansaugbehälter (1), der eine Teil in Form einer Leitung (1a) aufweist, und eine Lufthutze (11) enthält, die eine Ansaugöffnung (16) zum Auffangen der Frischluft enthält, wobei die Ansaugöffnung (16) sich an der Oberseite (11b) der Lufthutze (11) befindet und nach oben gerichtet ist, wenn die Vorrichtung in das Kraftfahrzeug eingesetzt ist, wobei der Behälter (1) einen zwischen die Lufthutze (11) und den Ansaugbehälter (1) eingefügten Deckel (5) enthält, wobei zwei Verbindungsöffnungen (8, 12) im Deckel (5) bzw. in der Lufthutze (11) ausgespart sind, wobei die zwei Öffnungen (8, 12) im Wesentlichen die gleiche Form haben und einander gegenüber angeordnet sind, **dadurch gekennzeichnet, dass** die Lufthutze (11) die Form eines nach oben offenen Gehäuses mit einem inneren Kasten (13) aufweist, der über einer Lufthutzenöffnung (12) angeordnet ist, um Wasser zurückzuhalten, das in die Lufthutze (11) eindringen konnte, wobei der innere Kasten (13) mit zwei seitlichen Luftöffnungen (14a, 14b) versehen ist.

2. Vorrichtung nach Anspruch 1, **dadurch gekennzeichnet, dass** der innere Kasten (13) an seiner Oberfläche mit Rippen (15) versehen ist.

3. Vorrichtung nach Anspruch 1 oder 2, **dadurch gekennzeichnet, dass** die Lufthutze (11) an einer Seite ihrer Oberseite (11b) eine Absenkung (26) enthält.

4. Kraftfahrzeug, das einen vorderen Endquerträger (22) aufweist, der zwischen dem Motorraum und dem Kühlergrill (24) des Fahrzeugs angeordnet ist, **dadurch gekennzeichnet, dass** es außerdem eine Frischluftansaugvorrichtung nach einem der Ansprüche 1 bis 3 und Befestigungseinrichtungen (20a, 20b, 20c) der Ansaugvorrichtung am vorderen Endquerträger (22) enthält, wobei die Ansaugvorrichtung so angeordnet ist, dass die Lufthutze (11) sich weiter vorne am Fahrzeug befindet als der vordere Endquerträger (22).

5. Kraftfahrzeug nach Anspruch 4, **dadurch gekennzeichnet, dass** die Lufthutze (11) sich weiter oben befindet als der vordere Endquerträger (22) .

6. Kraftfahrzeug nach einem der Ansprüche 4 und 5, **dadurch gekennzeichnet, dass** der vordere Endquerträger (22) eine Randleiste (23) aufweist, die zwischen die Lufthutze (11) und den Deckel (5) eingefügt ist, wobei die Randleiste (23) einen Durchlassdurchgang für die von der Lufthutze (11) kommende Luft aufweist.

7. Fahrzeug nach einem der Ansprüche 4 bis 6, **dadurch gekennzeichnet, dass** eine Dichtung (10) über die Gesamtheit oder einen Teil des Umfangs der Seitenwand (11a) der Lufthutze (11) im Bereich von deren Verbindung mit dem Deckel (5) angeordnet ist.

8. Fahrzeug nach einem der Ansprüche 4 7, **dadurch gekennzeichnet, dass** das Fahrzeug ein Stoßstangengitter (25) aufweist, wobei eine Dichtung (18) einerseits gegen die Lufthutze (11) der Ansaugvorrichtung und andererseits gegen das Stoßstangengitter (25) komprimiert ist.

## Claims

1. Fresh air intake device designed to be positioned in a motor vehicle for supplying an engine of the motor vehicle, the device comprising an intake container (1) having one portion in the form of a duct (1a) and a scoop (11) comprising an intake opening (16) to collect the fresh air, the intake opening (16) being located on the upper face (11b) of the scoop (11) and oriented upwardly when the device is positioned in the motor vehicle, the container (1) comprising a cover (5) interposed between the scoop (11) and the intake container (1), two communication orifices (8, 12) being respectively formed on the cover (5) and on the scoop (11), the two orifices (8, 12) being of substantially identical shape and arranged opposite one another, **characterized in that** the scoop (11) has the shape of a housing which is open at the top with an internal casing (13) arranged above a scoop orifice (12), so as to retain the water which has been able to penetrate the scoop (11), the internal casing (13) being provided with two lateral air openings (14a, 14b).

2. Device according to Claim 1, **characterized in that** the internal casing (13) is provided with ribs (15) on its external surface.

3. Device according to Claim 1 or 2, **characterized in that** the scoop (11) comprises a downwardly sloped portion (26) on one side of its upper face (11b).

4. Motor vehicle comprising an extreme front crossmember (22) arranged between the engine compartment and the radiator grille (24) of the vehicle, **characterized in that** it also comprises a fresh air intake device according to any one of Claims 1 to 3, and means for fixing (20a, 20b, 20c) the intake device to the extreme front crossmember (22), the intake device being arranged such that the scoop (11) is located further to the front of the vehicle than the extreme front crossmember (22).

5. Motor vehicle according to Claim 4, **characterized in that** the scoop (11) is located at a higher level than the extreme front crossmember (22).

6. Motor vehicle according to either of Claims 4 and 5, **characterized in that** the extreme front crossmember (22) has an edge (23) interposed between the scoop (11) and the cover (5), said edge (23) comprising a through-passage for the air coming from the scoop (11).

7. Vehicle according to any one of Claims 4 to 6, **characterized in that** a seal (10) is arranged over the entirety or a part of the periphery of the lateral wall (11a) of the scoop (11), in the region of the connection thereof to the cover (5).

8. Vehicle according to any one of Claims 4 7, **characterized in that** the vehicle comprises a grille shield (25), a seal (18) being compressed, on the one hand, against the scoop (11) of the intake device and, on the other hand, against the grille shield (25).
